# EUROPÄISCHE PATENTSCHRIFT

(11) **EP 2 333 737 B1**
(45) Veröffentlichungstag und Bekanntmachung des Hinweises auf die Patenterteilung: **14.03.2012**
(21) Anmeldenummer: 10193248.1
(22) Anmeldetag: 01.12.2010
(51) Int. Cl.: G08B 17/10, G08B 29/18, G01H 1/00, G01S 7/521, G01S 15/04

(54) **Gefahrenmelder und Verfahren zur Erkennung von Gegenständen im Nahbereich des Gefahrenmelders**
Hazard warning system with method for recognising objects in the vicinity of same
Dispositif d'alerte aux dangers et procédé de reconnaissance d'objets à proximité du dispositif d'alerte aux dangers

(30) Priorität: 01.12.2009 DE 102009056268
(43) Veröffentlichungstag der Anmeldung: 15.06.2011
(73) Patentinhaber: Techem Energy Services GmbH, 65760 Eschborn (DE)
(72) Erfinder: Kähler, Arne, 12683 Berlin (DE); Kilb, Dieter, 61479 Glashütten (DE)
(74) Vertreter: KEIL & SCHAAFHAUSEN Patentanwälte

(56) Entgegenhaltungen:
- DE-B3-102008 014 991
- DE-U1-202009 015 335
- GB-A- 1 330 714

## Beschreibung

Die Erfindung betrifft einen Gefahrenmelder sowie ein Verfahren zur Erkennung von Gegenständen im Nahbereich des Gefahrenmelders gemäß dem Oberbegriff der Ansprüche 1 und 8.

Bei dem Gefahrenmelder kann es sich insbesondere um einen Brandwarnmelder oder Rauchwarnmelder, aber auch einen Flammenmelder, Brandgasmelder, Wärmemelder, Feuchtmelder oder dergleichen handeln, der eine innerhalb des Gehäuses des Gefahrenmelders angeordnete Detektorkammer zum Nachweis von in die Detektorkammer gelangten und insbesondere eine Gefährdungssituation anzeigenden Stoffen und/oder zum Nachweis von in der Umgebung des Gefahrenmelders auftretenden und insbesondere eine Gefährdungssituation anzeigenden Änderungen üblicher Umgebungszustände aufweist.

Insbesondere im Fall einer Detektorkammer zum Messen bzw. Detektieren von eingetretenen Stoffen, wie Rauch, Gas, Feuchtigkeit oder dgl, welche jeweils charakteristisch für bestimmte Gefährdungssituationen ist, weist das Gehäuse vorzugsweise Öffnungen (bzw. mindestens eine Öffnung) auf, damit der in der Detektorkammer zu messende bzw. zu detektierende gefährliche Stoff einfach in das Gehäuse und die Detektorkammer eintreten kann. Die Gefährdungssituation kann in diesem Fall beispielsweise Feuer, Sauerstoffmangel bei beispielsweise erhöhtem CO₂-Antei in der Luft oder auch nur die Gefahr einer Schimmelbildung aufgrund hoher Raumluftfeuchtigkeit sein.

Der Nachweis von in der Umgebung des Gefahrenmelders auftretenden Änderungen üblicher Umgebungszustände kann insbesondere den Nachweis von Wärme bei einem Feuer betreffen, der durch in der Detektorkammer angeordnete Temperatursensoren nachgewiesen wird. In diesem Fall ist das Vorsehen von Öffnungen in dem Gehäuse nicht zwingend notwendig, aber häufig sinnvoll, da geschlossene Gehäuse von Gefahrenmeldern ggf. eine abschirmende Wirkung für den Nachweis der Umgebungszustände haben. Die erfindungsgemäß betroffene Detektion von Umgebungszuständen bezieht sich daher insbesondere auf die Erfassung von physikalisch-chemischen Zustandsgrößen der Umgebungsluft des Gefahrenmelders, die nicht zwangsläufig mit in die Detektorkammer eintretenden Stoffen einhergeht, aber durch in der Umgebung des Gefahrenmelders vorhandenen Gegenständen, bspw. infolge Abschirmung oder Isolierung, beeinflusst, insbesondere verzögert, werden kann.

Sofern Öffnungen in dem Gehäuse vorgesehen sind, ist ein solcher Gefahrenmelder typischer Weise auch zur Prüfung der Durchlässigkeit der in dem Gehäuse ausgebildeten Öffnungen ausgebildet. Eine dafür vorgesehene Selbstprüfeinrichtung kann die mindestens einmal jährlich vorgeschriebene Sichtprüfung von Brandwarnmeldern in Wohnungen automatisieren. Laut Norm DIN 14676 "Rauchwarnmelder für Wohnhäuser, Wohnungen und Räume mit wohnungsähnlicher Nutzung - Einbau, Betrieb und Instandhaltung" sind Rauchwarnmelder nämlich mindestens einmal jährlich einer Sicht- und Funktionsprüfung zu unterziehen. Die Sichtprüfung dient insbesondere dazu, die Eintrittsöffnungen derartiger, als Rauch- bzw. Brandwarnmelder ausgebildeten Gefahrenmelder auf ihre Durchlässigkeit hin zu überprüfen.

Durch Selbstprüfeinrichtungen ist es möglich, den Betrieb der Brandwarnmelder oder sonstiger Gefahrenmelder) wirtschaftlicher zu gestalten, da die Sichtprüfung automatisiert durchgeführt werden kann und kein Prüfer Zugang zu einer Wohnung erhalten muss. Die Automatisierung der Sichtprüfung durch eine Selbstprüfeinrichtung ermöglicht es auch, die Prüfintervalle über das vorgeschriebene Maß einer einmal jährlichen Prüfung hinaus zu verkürzen und dadurch die Sicherheit der Brand- bzw. allgemein Gefahrenwarnmeldung zu erhöhen.

Ziel der Brand- bzw. Gefahrenwarnmelder ist es, in Wohnungen oder wohnungsähnlich genutzten Räumen anwesende Personen frühzeitig vor Bränden, Brandrauch oder sonstigen gefährlichen Stoffen oder Zuständen zu warnen, die in ihrer speziell an den zu warnenden Stoff bzw. nachzuweisenden Zustand angepassten Detektorkammer nachgewiesen werden, damit die Personen dem Gefahrenereignis angepasst reagieren können. Hinsichtlich der großen Bedeutung dieser Gefahrenmelder ist es daher wichtig, ihre zuverlässige Betriebsfunktion durch möglichst häufige Überprüfungen sicherzustellen.

Aus der DE 10 2006 023 048 B4 ist ein Brand- bzw. Rauchwarnmelder mit einem Gehäuse und einer Selbstprüfeinrichtung zur Prüfung der Durchlässigkeit von Öffnungen in dem Gehäuse des Brandwarnmelders bekannt, bei dem die Raucheintrittsöffnungen akustisch beispielsweise mittels eines innerhalb des Gehäuses angeordneten Ultraschallsensors abgetastet werden. Der Ultraschallsensor ist derart in dem Gehäuse des Warnmelders angeordnet, dass der Raum von der Öffnung in dem Warnmelder bis zu einem Branddetektionssensor bzw. der Detektorkammer sowie gegebenenfalls der Raum unmittelbar vor der Öffnung außerhalb des Brandwarnmelders mit erfasst wird. Letzteres ist sinnvoll um festzustellen, ob der Warnmelder beispielsweise durch unmittelbar vor der Öffnung des Brandwarnmelders angeordnete Möbel zugestellt oder abgeschirmt ist.

Aus der JP 02128298 A (Patent Abstracts of Japan) ist ein optisch arbeitender Rauchwarnmelder mit einer Detektorkammer bekannt, deren Raucheintrittsöffnungen durch Anlegen eines akustischen Signals und Auswerten der Resonanzfrequenz der Detektionskammer überprüft werden. Allerdings kann durch diese Art der Überprüfung nicht festgestellt werden, ob der Rauchwarnmelder zugestellt ist oder die äußeren Gehäuseöffnungen des Rauchwarnmelders zugeklebt oder verstopft sind.

Ferner beschreibt die GB 1 330 714 B einen Ultraschall-Einbruchsalarmgeber, der auch als Feueralarmmelder verwendet werden kann, indem ein Feuer durch die Luftbewegung aufgrund der durch die Hitze erzeugten Konvektionsströme der Luft detektiert wird. Damit Schallwellen aus allen Richtungen, d.h. über 360° in allen Ebenen, empfangen werden können, werden verschiedene Ultraschall-Empfangswandler vorgeschlagen, die in verschiedene Richtungen ausgerichtet sind.

DE 20 2009 015 335 U1 zeigt einen Rauchmelder mit einer Vorrichtung zum Abtasten der Umgebung, umfassend mindestens eine Sendeeinrichtung und eine Empfangseinrichtung die im Betrieb die reflektierten Signale der Sendeeinrichtung empfängt. Die Signale werden mit einer Auswerteeinrichtung ausgewertet.

Nachteilig bei diesen Lösungen ist, dass übliche Ultraschallsensoren durch den kleinen, keulenartigen Ultraschallsende- und -empfangswinkel Gegenstände nur in einem abgegrenzten Winkelbereich erkennen können. Um Gegenstände an beliebiger Position vor und neben dem Gefahrenmelder, d.h. in dessen Nahbereich, beispielsweise bis zu einem halben Meter Entfernung, erkennen zu können, müssten eine Vielzahl von einzelnen Ultraschallsensoren eingesetzt werden, die entsprechend ihrer Appertur derart angeordnet sind, dass über einen Elevationswinkel von mindestens 180° der gesamte Azimutwinkelbereich abgedeckt wird.

Aufgabe der Erfindung ist es, eine Nahbereichsprüfung vorzuschlagen, mit welcher Gegenstände, die sich in beliebiger Position im Nahbereich des Gefahrenmelders befinden, mit einem technisch einfach aufgebauten, kostengünstigen Sensor erfasst werden können.

Diese Aufgabe wird bei einem Gefahrenmelder mit den Merkmalen des Anspruchs 1 gelöst. Dazu ist in dem Gefahrenmelder eine Einrichtung zur Erkennung von Gegenständen im Nahbereich des Gefahrenmelders mit genau einem Ultraschallsensor vorgesehen, welcher dazu eingerichtet ist, einen Elevationswinkelbereich von mindestens 180° und einen Azimutwinkelbereich von 360° zu erfassen. Statt den einen Ultraschallsensor in einem Modus zu betreiben, in welchem seine Sende- und Empfangscharakteristik keulenartig um eine Hauptausbreitungsrichtung erstreckt ist, die typischerweise einen Öffnungswinkelbereich zwischen 60° bis maximal 120° erfasst, wird der Ultraschallsensor erfindungsgemäß in einem Modus betrieben, in welchem eine signifikante Ultraschallaussendung und Empfangsempfindlichkeit in einem Elevationswinkelbereich von 180° rotationssymmetrisch um eine Vorzugsausbreitungsrichtung erfolgt. Dadurch kann der gesamte Nahbereich einer Halbsphäre um den Brandwarnmelder, d.h. mit einem Elevationswinkel von -90° bis +90° und einem Azimutwinkel von 0° bis 360°, auf die Anwesenheit von Gegenständen untersucht werden, wozu lediglich ein einziger Ultraschallsensor notwendig ist.

Gemäß einer Ausführungsform der vorliegenden Erfindung könnte dazu der genau eine Ultraschallwandler des genau einen Ultraschallsensors auf einem Stellglied angeordnet sein, das zur Ausführung von Dreh- und/oder Kippbewegungen ansteuerbar ist, so dass durch mehrfaches Aussenden und Empfangen von Ultraschallwellen in verschiedene Raumrichtungen respektive verschiedenen Positionen des Stellgliedes der gesamte Nahbereich um den Gefahrenmelder abgetastet werden kann. Das Stellglied könnte erfindungsgemäß beispielsweise aus einem sich durch Anlegen einer Spannung in seiner Form ändernden Material, beispielsweise einem bimetallischen Material oder einem piezokeramischen Material, aufgebaut sein. Ebenso kommt eine elektromotorische Verstellung des Piezoelements in Frage, welche separat in zwei verschiedene Raumrichtungen möglich ist. Anstelle einer beispielsweise orthogonalen elektromotorischen Verstellung in zwei verschiedene Raumrichtungen könnte auch eine Zwangsführung des Ultraschallwandlers vorgesehen werden, die bei einem elektromotorischen Antrieb des Ultraschallwandlers dafür sorgt, dass eine bestimmte Bewegungsbahn abgefahren wird, mit welcher der gewünschte Nahbereich abgedeckt werden könnte. Diese erfindungsgemäße Lösung erfordert neben der Steuer- und Detektionsschaltung für den Betrieb des Ultraschallwandlers zusätzliche mechanische und/oder elektrische bzw. elektronische Komponenten, die eine Ausrichtung des Ultraschallwandlers in dem Gefahrenmelder einstellen können. Derartige zusätzliche Bauteile sind gegebenenfalls mechanisch und/oder elektrisch störanfällig, so dass dieser Betriebsmodus des Ultraschallsensors durchaus noch weiter verbessert werden kann.

Gemäß einer weiter verbesserten Ausführungsform wird vorgeschlagen, dass der Ultraschallsensor in vergleichbarer Weise genau einen Ultraschallwandler, beispielsweise ein Piezoelement, und eine Steuer- und Detektionsschaltung mit einer Rechenschaltung aufweist, wobei die Rechenschaltung dazu eingerichtet ist, den Ultraschallwandler als Ultraschallsensor und/oder Ultraschallempfänger mit einer variabel einstellbaren Versorgungsspannung zu betreiben.

Zum Erzeugen und Aussenden der Ultraschallwellen wird an den Ultraschallwandler üblicherweise eine Wechselspannung mit einer an den Wandler angepassten Frequenz angelegt, die zur Erzeugung der Ultraschallwellen führt. Der Empfang von Ultraschallwellen erfolgt üblicherweise mittels Frequenz-, Phasen-und/oder Amplitudenauswertung. In dieser Ausführungsform macht sich die Erfindung zunutze, dass die elevationswinkelabhängige Sendeleistung bzw. Empfindlichkeit von der an den Ultraschallwandler angelegten Versorgungsspannung abhängt und üblicherweise mit einer Erhöhung der Versorgungsspannung steigt. Somit kann durch Einstellen einer geeigneten, über der üblichen Versorgungsspannung des Ultraschallwandlers, insbesondere des Piezoelements, liegenden Versorgungsspannung ein Elevationsbereich von mindestens 180° und ein Azimutwinkelbereich von 360° zumindest für den Nahbereich des Gefahrenmelders abgedeckt werden. Der Nahbereich kann einen Bereich bis etwa 100 cm umfassen. Erfindungsgemäß soll durch den Nahbereich jedoch mindestens eine Umgebung bis etwa 50 cm um den Gefahrenmelder erfasst werden. Bei der Einstellung der Versorgungsspannung kann optional die Sendeleistungs-/Empfindlichkeits-Kennlinie des Ultraschallwandlers berücksichtigt werden, die im Gefahrenmelder bei der Herstellung gespeichert und getestet sowie gegebenenfalls geeicht werden kann. Nach einer Eichung ist es beispielsweise möglich, den gewünschten Elevationswinkelbereich vorzugeben und durch die Rechenschaltung mittels Abfrage der Kennlinie die gewünschte Versorgungsspannung auszuwählen und einzustellen.

In Weiterbildung der Erfindung kann die Steuer- und Detektionsschaltung zur Spannungsversorgung eine Batterie aufweisen, die im Rahmen der Erfindung auch als Akkumulator ausgebildet sein kann. Die Batterie bzw. der Akkumulator kann erfindungsgemäß auch die Spannungsversorgung des gesamten Detektors bzw. Gefahrenmelders bilden. Um auf einfache Weise die erfindungsgemäß vorgeschlagene, variabel einstellbare Versorgungsspannung zu erzeugen, kann die Steuer- und Detektionsschaltung ferner eine Spannungserhöhungsschaltung aufweisen oder mit dieser verbunden sein, die gepulst und vorzugsweise mittels eines Spannungsteilers oder dgl. regelbar eine über der Batteriespannung liegende Versorgungsspannung für den Ultraschallsensor bzw. Ultraschallwandler zur Verfügung stellt. Dazu kann die Spannungserhöhungsschaltung vorzugsweise temporäre Energiespeichermedien, wie Kondensatoren, aufweisen, die in einem kurzzeitigen Pulsbetrieb eine über der Versorgungsspannung der Batterie liegende Spannung zur Verfügung stellen können.

Damit der Ultraschallwandler schnell von einem Sende- in einen Empfangsbetrieb umgeschaltet werden kann, kann die Steuer- und Detektionsschaltung bzw. deren Rechenschaltung erfindungsgemäß dazu eingerichtet sein, beim Umschalten von einem Aussenden der Ultraschallwellen zu einem Empfangen der Ultraschallwellen den Ultraschallwandler über einen niederohmigen Widerstand kurzzuschließen und/oder das ausschwingende Signal des Ultraschallwandlers zu messen und eine gegenphasige Ansteuerung vorzunehmen. Diese erfindungsgemäß vorgeschlagene Umschaltung der beiden Betriebsmodi des Ultraschallwandlers ist insbesondere von Bedeutung, wenn die Detektion auf die Erkennung von Gegenständen im Nahbereich, d.h. mindestens bis etwa 50 cm, aber auch darüber hinaus bis etwa 100 cm, beschränkt werden soll, weil dies über eine Laufzeiterkennung der ausgesendeten und möglicherweise von einem Gegenstand im Nahbereich reflektierten Ultraschallwellen erreichen wird und ein rechtzeitiges Umschalten des einen Ultraschallwandlers aus dem Sendebetriebsmodus in den Empfangsbetriebsmodus erfordert, wie später noch näher beschrieben wird.

Damit der genau eine Ultraschallsensor mit dem genau einen Ultraschallwandler den gewünschten Elevationswinkelbereich von mindestens 180° möglichst gut abdecken kann, wird erfindungsgemäß vorgeschlagen, dass der Ultraschallsensor eine jeweils annähernd sphärische, rotationselliptische oder rotationssinusförmige Oberfläche des sensoraktiven Gehäusebereichs des Ultraschallsensors aufweisen kann. Es hat sich herausgestellt, dass durch ein derartig geformtes Gehäuse die Ultraschallwellen jeweils in Richtung der Normalen der Gehäuseoberfläche verstärkt werden, so dass die erfindungsgemäß vorgeschlagenen Formen eine Aussendung der Ultraschallwellen über den gesamten Elevationswinkelbereich von 0° bis 180° bzw. - mit der Symmetrieachse als Bezugspunkt - 90° bis +90° begünstigen.

Eine möglichst gleichmäßige Detektion von Gegenständen im Nahbereich des Gefahrenmelders wird erfindungsgemäß auch dadurch gefördert, dass der Ultraschallsensor im Zentrum des Gefahrenmelders an dessen Gehäuseoberfläche angeordnet ist. Besonders bevorzugt ist der Ultraschallsensor erhöht angeordnet, so dass der sensoraktive Gehäusebereich aus der Gehäuseoberfläche des Gefahrenmelders herausragt. Insbesondere in dieser Anordnung lässt sich auf einfache Weise ein Elevationswinkel zwischen vorzugsweise 180° und 200° erreichen, der auch Gegenstände im rückwärtigen Bereich bis hin zur Montagefläche des Gefahrenmelders, typischerweise der Decke, erlaubt. Dabei hat es sich als besonders vorteilhaft herausgestellt, wenn auch die Oberfläche des sensoraktiven Gehäusebereichs über einen reinen Halbkreis bzw. eine reine Halbellipse hinausgeht, d.h. ausgehend von dem Ultraschallwandler zunächst eine Verbreiterung der Oberfläche des sensoraktiven Gehäusebereichs stattfindet, die sich dann zur Spitze des Ultraschallsensors hin entsprechend der gewählten Form der Oberfläche verjüngt.

Gemäß einer weiter bevorzugten Ausführungsform ist erfindungsgemäß vorgesehen, dass ein mit Öffnungen, d.h. mindestens einer Öffnung, versehener Gefahrenmelder auch eine Selbstprüfeinrichtung zur Prüfung der Durchlässigkeit der in dem Gehäuse ausgebildeten Öffnung(en) aufweist. Mit der vorgeschlagenen Erfassung des Nahbereichs eines Gefahrenmelders kann nämlich bspw. eine Verstopfung einer Gehäuseöffnung nicht festgestellt werden. Daher ist es für eine möglichst zuverlässige Gesamtprüfung des Gefahrenmelders notwendig, sowohl die Öffnungen des Gefahrenmelders auf Durchlässigkeit als auch den Nahbereich des Gefahrenmelders auf Gegenstände hin zu überprüfen, welche die Funktion des Gefahrenmelders bspw. durch Abschirmung beeinträchtigen. Eine besonders bevorzugte Ausführungsform der Selbstprüfeinrichtung sieht einen innerhalb des Gehäuses angeordneten und vorzugsweise akustischen Sensor vor, der die Öffnung(en) des Gehäuses und den Weg von den Öffnungen des Gehäuses bis zur Sensorkammer erfasst und überprüft. Der Sensor ist dabei vorzugsweise so angeordnet, dass er auch den unmittelbaren Öffnungsbereich außen vor den Öffnungen des Gefahrenmelders mit erfasst, der durch die erfindungsgemäß vorgeschlagene Nahbereichserkennung aufgrund von Abschirmungen durch das Sensorgehäuse häufig nicht mit abgedeckt wird. In dieser vorgeschlagenen Kombination einer Selbstprüfung und der Nahbereichserkennung kann eine umfassende Selbstprüfung der Gefahrenmelder durchgeführt werden. Als Sensoren für die Selbstprüfeinrichtung eigenen sich insbesondere in einem herkömmlichen Betriebsmodus betriebene Abstandssensoren, meist Ultraschallsensoren, die einen keulenartigen Sende- und Empfindlichkeitsbereich aufweisen und derart im Bereich der Sensorkammer angeordnet sind, dass sie den Strömungsweg von der Sensorkammer zu den Gehäuseöffnungen abdecken und der Sende- und Empfindlichkeitsbereich durch die Öffnungen hindurch in den Außenbereich des Gefahrenmelders reicht.

Erfindungsgemäß ist die Steuer- und Detektionsschaltung bzw. deren Rechenschaltung auch zur Durchführung des nachfolgend beschriebenen Verfahrens eingerichtet, wobei erfindungsgemäß nicht sämtliche der nachfolgend beschriebenen Verfahrensschritte vorgesehen sein müssen, um eine besonders bevorzugte Ausführungsform der vorliegenden Erfindung zu erreichen. Insbesondere kann die Steuer- und Detektionsschaltung sowohl die Nahbereichserkennung als auch die Selbstprüfeinrichtung steuern.

Die Aufgabe wird auch durch das erfindungsgemäß vorgeschlagene Verfahren mit den Merkmalen des Anspruchs 8 gelöst. Das vorgeschlagene Verfahren dient entsprechend der Erkennung von Gegenständen im Nahbereich eines vorbeschriebenen Gefahrenmelders, welcher eine innerhalb eines Gehäuses des Gefahrenmelders angeordnete Detektorkammer aufweist, um einen in die Detektorkammer gelangten Stoff, bspw. Rauch, zu detektieren und/oder eine Änderung eines üblichen Umgebungszustandes des Gefahrenmelders, bspw. der Temperatur, nachzuweisen. Der Gefahrenmelder kann mindestens eine Öffnung in dem Gehäuse zum Eintritt eines in der Detektorkammer zu messenden gefährlichen Stoffs, beispielsweise Rauch, Gas, Wärme, Feuchte. Ferner kann in dem Gefahrenmelder erfindungsgemäß eine Selbstprüfeinrichtung zur Durchführung der Durchlässigkeit der in dem Gehäuse ausgebildeten Öffnung(en) vorgesehen sein, welche durch eine Steuer- und Detektionsschaltung betrieben wird. Erfindungsgemäß wird vorgeschlagen, dass der Nahbereich des Gefahrenmelders mit genau einem Ultraschallsensor erfasst wird, indem ein, vorzugsweise der genau eine, Ultraschallwandler des einen, vorzugsweise des genau einen, Ultraschallsensors als Ultraschallsender und Ultraschallempfänger mit einer variabel einstellbaren Versorgungsspannung betrieben wird, welche derart bemessen wird, dass der Elevationswinkelbereich des Ultraschallsensors mindestens 180°, vorzugsweise zwischen 180° und 200°, über den gesamten Azimutwinkelbereich von 0° bis 360° beträgt. Durch die variabel einstellbare Versorgungsspannung kann ein Ultraschallwandler, der im Bereich seiner normalen Versorgungsspannung betrieben lediglich einen Elevationswinkelbereich von 60° bis 120° um seine Symmetrieachse abdeckt, zeitweise so betrieben werden, dass ein Elevationswinkelbereich zwischen 180° und 200° erreicht wird, wobei die Sende- und Empfangsempfindlichkeit des Ultraschallsensors im Randbereich des Elevationswinkelbereichs für eine Nahbereichserkennung bis zu einem Abstand von mindestens etwa 50 cm, aber durchaus auch bis zu 100 cm, ausreichen. Bei einer erfindungsgemäß erhöhten Versorgungsspannung ist die Empfindlichkeit in Richtung des bevorzugten Elevationswinkelbereichs sehr hoch, so dass auch in großer Entfernung vor dem Gefahrenmelder angeordnete Gegenstände detektiert werden.

Um den Ultraschallsensor auf die erfindungsgemäß gewünschte Detektion von Gegenständen im Nahbereich des Gefahrenmelders zu beschränken, wird gemäß einer besonders bevorzugten Ausführungsform des erfindungsgemäß vorgeschlagenen Verfahrens, welches beispielsweise in der Steuerschaltung des Gefahrenmelders implementiert ist, vorgeschlagen, nach dem Aussenden einer Ultraschallwelle bzw. eines Ultraschallwellenpulses während der Sendesignalerzeugung den Ultraschallwandler nur für ein vorbestimmtes Zeitfenster auf Empfang zu schalten, welches derart bemessen ist, das eine in dem zu erfassenden Nahbereich des Gefahrenmelders an einem Gegenstand reflektierte Ultraschallwelle mit dem Ultraschallwandler empfangen wird. Das Zeitfenster wird also so eingestellt, dass eine Ultraschallwelle sich bis zu einem Gegenstand im Nahbereich des Gefahrenmelders fortpflanzen kann, dort reflektiert wird und wieder bis zu dem in diesem Fall als Ultraschallempfänger arbeitenden Ultraschallwandler zurückkehrt. Zeitlich später eintreffende Ultraschallwellen werden durch die Steuer- und Detektionsschaltung des Gefahrenmelders erfindungsgemäß nicht mehr ausgewertet.

Um den Ultraschallwandler sehr schnell aus seinem Sendemodus in seinen Empfangsmodus umschalten zu können, wird erfindungsgemäß vorgeschlagen, dass der Ultraschallwandler beim Umschalten von dem Aussenden der Ultraschallwellen zu dem Empfangen der Ultraschallwellen über einen niederohmigen Widerstand kurzgeschlossen und/oder das ausschwingende Signal des Ultraschallwandlers gemessen und eine gegenphasige Ansteuerung vorgenommen wird. Hierdurch wird die in dem Ultraschallwandler beim Aussenden der Ultraschallwellen gespeicherte Energie schnell abgeführt, so dass der Ultraschallwandler rechtzeitig für den Empfang von im Nahbereich reflektieren Schallwellen empfangsbereit ist. Dies ist erfindungsgemäß besonders wichtig, da gerade (und insbesondere nur) Gegenstände im Nahbereich des Ultraschallwandlers detektiert werden sollen.

Gemäß einem weiteren, besonders bevorzugten Verfahren zur Ansteuerung des Gefahrenmelders wird der Ultraschallwandler zyklisch insbesondere durch veränderte Einstellung der Versorgungsspannung mit unterschiedlicher Sendeleistung und jeweils an die Sendeleistung angepasster Empfangsempfindlichkeit betrieben. Dies ermöglicht eine über den Elevationswinkelbereich aufgelöste Detektion von Gegenständen im Nahbereich.

Beispielsweise können die Sendeleistung und Empfangsempfindlichkeit während eines Zyklus von einem Minimalwert, welcher lediglich einen minimalen Elevationswinkelbereich um die Symmetrieachse des Gefahrenmelders abdeckt, bis zu einem Maximalwert, welcher den maximalen Elevationswinkelbereich abdeckt, gesteigert werden.

In Weiterbildung dieses Erfindungsgedankens kann der Zyklus abgebrochen werden, sobald ein Gegenstand im Nahbereich des Gefahrenmelders detektiert wird. Diese zyklische Aussendung der Sendeleistung hat den Vorteil, dass beginnend mit einem minimalen Elevationswinkelbereich durch jede Steigerung der Versorgungsspannung ein an seinen Rändern erweiterter Elevationswinkelbereich abgetastet wird. Sofern also in einem vorgehenden Zyklusschritt noch kein Gegenstand im Nahbereich des Gefahrenmelders detektiert wurde, im darauffolgenden Zyklusschritt mit erweitertem Elevationswinkelbereich dagegen ein Gegenstand im Nahbereich des Gefahrenmelders detektiert wird, kann der Elevationswinkelbereichsabschnitt durch Vergleich der beiden in den aufeinander folgenden Zyklusschritten erfassten Elevationswinkelbereiche genau angegeben werden, in welchem sich der Gegenstand befindet. In Kenntnis der Kennlinie kann dies sogar durch Winkelangaben geschehen. Durch Anwendung dieses vorgeschlagenen Verfahrens ist daher sogar eine winkelaufgelöste Detektion von Gegenständen im Nahbereich des Gefahrenmelders auf technisch einfache und damit kostengünstige Weise möglich.

Erfindungsgemäß kann die Steuer- und Detektionsschaltung im Falle des Erkennens eines Gegenstands im Nahbereich des Gefahrenmelders dazu eingerichtet sein, eine Störungsmeldung auszugeben. Dies kann durch eine akustische und/oder optische Anzeige erfolgen. Ferner kann der Gefahrenmelder eine kabelgebundene und/oder kabellose, d.h. auf Funk-, Infrarot- oder sonstiger kabelloser elektromagnetischer Kommunikation beruhende, Kommunikationseinrichtung aufweisen, welche eine Fehlermeldung ausgibt. Diese Fehlermeldung kann so kodiert sein, dass als Fehlergrund ein Fremdgegenstand im Nahbereich, gegebenenfalls unter Angabe des Elevationswinkelbereichs, mit angegeben wird.

Weitere Merkmale, Vorteile und Anwendungsmöglichkeiten der vorliegenden Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Es zeigen:
- Fig. 1: den typischen Verlauf der Sendeleistung bzw. Empfindlichkeit eines Ultraschallsensors über dem Elevationswinkelbereich;
- Fig. 2: die Sendeleistung eines Ultraschallsensors über der Versorgungs- spannung;
- Fig. 3: einen erfindungsgemäßen Gefahrenmelder in einer schematischen Schnittzeichnung;
- Fig. 4: einen erfindungsgemäßen Ultraschallsensor in einer schemati- schen Schnittzeichnung;
- Fig. 5: schematisch verschiedene Elevationswinkelbereiche eines gemäß dem erfindungsgemäßen Verfahren betriebenen Gefahrenmelders;
- Fig. 6 a,b,c, d,e,f: verschiedene Oberflächen des sensoraktiven Gehäusebereichs eines erfindungsgemäßen Ultraschallsensors und
- Fig. 7: eine Draufsicht auf den erfindungsgemäßen Ultraschallsensor.

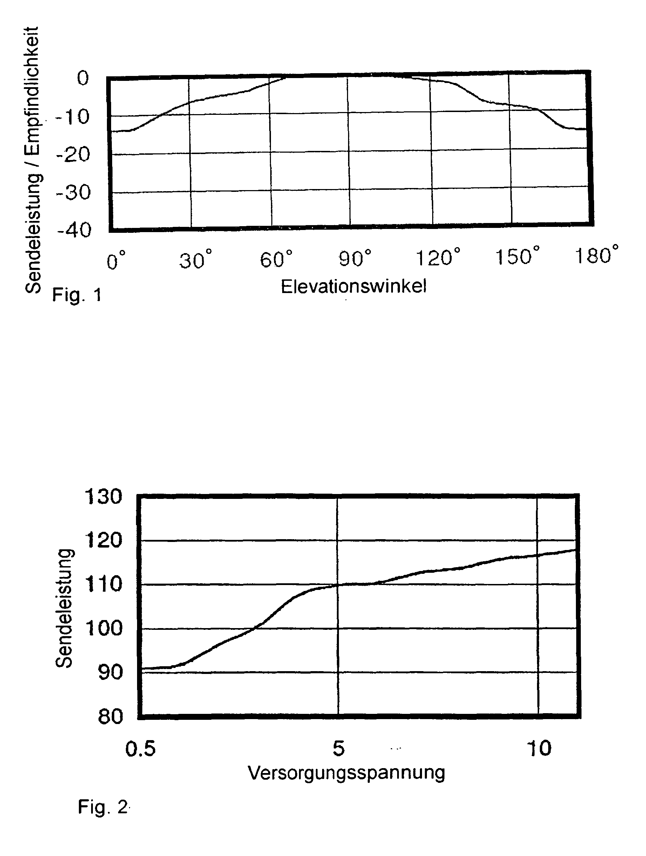

In Fig. 1 ist die Sendeleistung bzw. die Empfindlichkeit eines üblichen Ultraschallsensors über einen Elevationswinkel von 0° bis 180° dargestellt, wobei der Bereich von 90° der Symmetrieachse des Ultraschallsensors entspricht, von dem aus der Elevationswinkel mit -90° bis +90° verläuft. Die Sendeleistung bzw. Empfindlichkeit ist in beliebigen Einheiten aufgetragen und auf die maximale Sendeleistung im Bereich der Symmetrieachse des Ultraschallsensors bei 90° normiert. Es zeigt sich, dass in einem Elevationswinkelbereich von 60° bis 120° (respektive -30° bis +30°) im Wesentlichen die maximale Sendeleistung bzw. Empfindlichkeit zur Verfügung steht. In den weiter außen liegenden Elevationswinkelbereichen fällt die Sendeleistung mit größer werdendem Elevationswinkel ab, so dass der typische Arbeitsbereich eines Ultraschallsensors bei Ansteuerung mit der nominalen Versorgungsspannung im Bereich einer um die Symmetrieachse des Ultraschallsensors liegenden Sende- bzw. Empfangskeule in der Größenordnung von -30° bis +30° liegt.

In Fig. 2 ist der Verlauf der Sendeleistung eines typischen Ultraschallsensors in Abhängigkeit von der Versorgungsspannung, beides in beliebigen Einheiten, dargestellt. Da es sich bei Gefahrenmeldern wie Brand- oder Rauchwarnmeldern sowie sonstigen an beliebigen Orten innerhalb eines Gebäudes anbringbaren Warnmeldern häufig um batteriebetriebene Geräte handelt, werden diese typischerweise durch eine Batterie (oder einen Akkumulator) mit einer Versorgungsspannung in der Größenordnung von ca. 3 Volt betrieben, der ein bestimmter Wert der Sendeleistung entspricht.

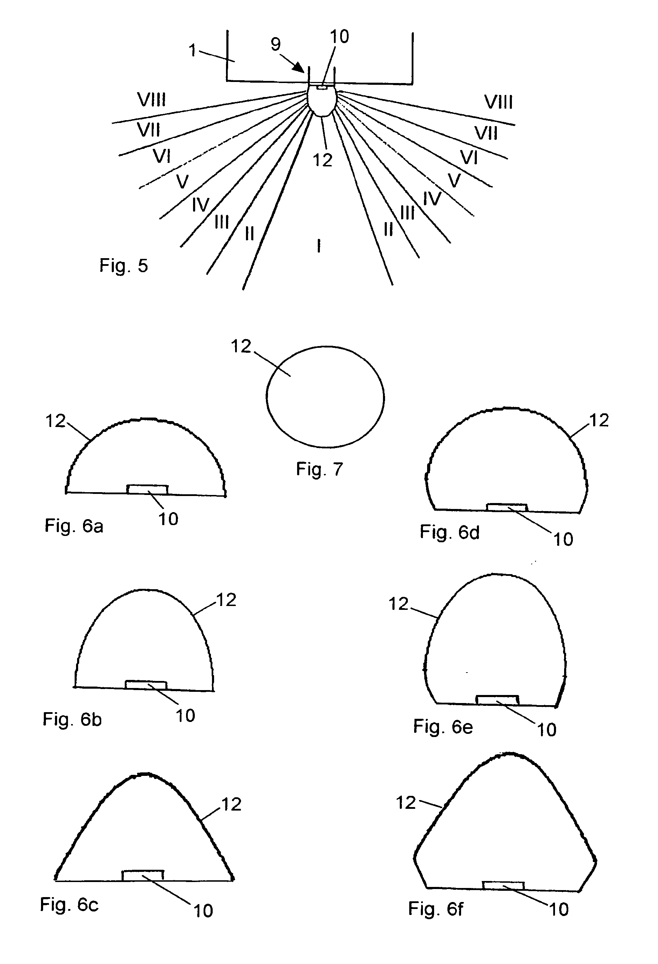

Ein erfindungsgemäßer Gedanke der vorliegenden Erfindung liegt nun darin, den Abfall der Sendeleistung bzw. Empfindlichkeit in größeren Elevationswinkelbereichen über den betragsmäßigen Winkel von etwa 30° hinaus durch eine variabel einstellbare Versorgungsspannung auszugleichen. Denn wie ein Vergleich der Fig. 1 und 2 zeigt, kann der Abfall der Sendeleistung bzw. Empfindlichkeit bei größeren Elevationswinkeln relativ zu der Symmetrieachse des Ultraschallsensors durch eine temporäre Erhöhung der Versorgungsspannung ausgeglichen werden. Das hierzu bevorzugt eingesetzte Verfahren wird später in Bezug auf Fig. 5 noch näher erläutert.

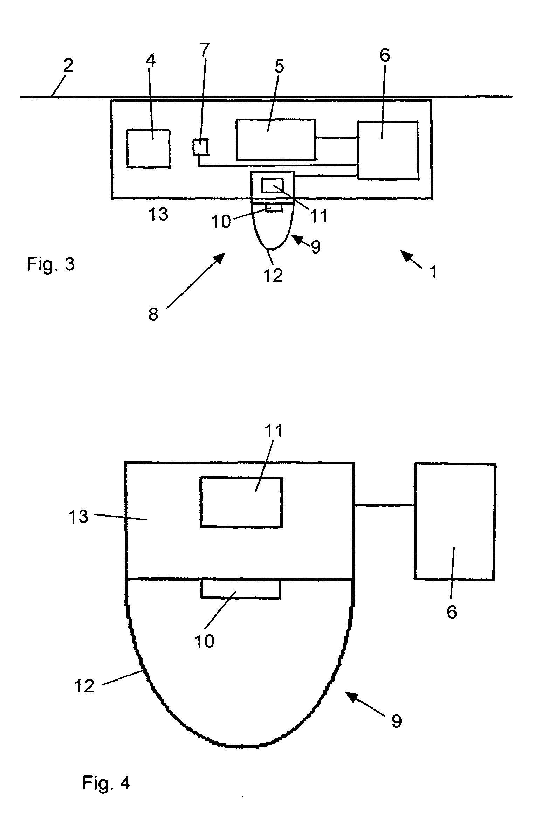

Fig. 3 zeigt einen erfindungsgemäßen Gefahrenmelder 1, der als Brand- bzw. Rauchwarnmelder ausgebildet ist und an einer Zimmerdecke 2 im Raum montiert ist. Wesentliche Komponenten des Gefahrenmelders 1 sind in der Schnittzeichnung gemäß Fig. 3 schematisch dargestellt.

Innerhalb des Gehäuses 3 des Gefahrenmelders sind Öffnungen 4 für den Eintritt des zu messenden, gefährlichen Stoffs vorgesehen. Hierbei handelt es sich im Falle eines Brand- oder Rauchwarnmelders um Wärme bzw. Rauch. Im Falle anderer Gefahrenmelder können durch die Öffnungen 4 des Gefahrenmelders 1 auch Gas, Feuchte oder sonstige Stoffe eintreten, die in einer geeignet ausgebildeten Detektorkammer 5 nachgewiesen werden.

Bei Rauchwarnmeldern basiert die Detektorkammer 5 häufig auf einem optischen Messprinzip, bei dem Licht in die mit lichtabsorbierenden Innenwänden ausgestattete Detektorkammer 5 eingestrahlt wird. Sofern sich keine Rauchpartikel in der Detektorkammer 5 befinden, kann ein ebenfalls in der Detektorkammer 5 angeordneter Lichtsensor kein Licht nachweisen. Sofern jedoch Licht durch in die Detektorkammer 5 eintretende Rauchpartikel gestreut wird, wird der Detektor Licht messen und auf diese Weise Rauch nachweisen. Die Ansteuerung der in der Detektorkammer 5 vorgesehenen Elektronik sowie gegebenenfalls die Ausgabe von Gefahrsignalen wird durch eine in dem Gefahrenmelder 1 vorgesehene Steuer- und Detektionsschaltung 6 realisiert, die insbesondere eine Rechenschaltung beispielsweise in Form eines Mikroprozessors aufweist, der u.a. zur Durchführung der Detektionsmessung in der Detektorkammer 5 eingerichtet ist.

Da es für die Funktionsweise des Gefahrenmelders 1 wichtig sein kann, dass die Öffnungen 4 in dem Gehäuse 3 nicht verstopft sind und in der Detektorkammer 5 nachzuweisende, gefährliche Stoffe in den Gefahrenmelder 1 eintreten können, schreibt die Norm DIN 14676 mindestens eine einmal jährlich stattfindende Sicht- und Funktionsprüfung vor, bei der u.a. überprüft werden muss, ob die Öffnungen 4 in dem Gehäuse 3 noch durchgängig sind. Um diese Sichtprüfung zu automatisieren und gegebenenfalls auch in einem kürzeren Turnus durchführen zu können, ist in dem Gefahrenmelder 1 gemäß dem vorgeschlagenen Beispiel eine Selbstprüfeinrichtung 7 zur Prüfung der Durchlässigkeit der in dem Gehäuse 3 ausgebildeten Öffnungen 4 vorgesehen.

Diese Selbstprüfeinrichtung 7 kann entsprechend der Offenbarung in der DE 10 2006 023 048 B4 einen Ultraschallsensor aufweisen, der innerhalb des Gehäuses 3 des Gefahrenmelders 1 den Weg von der Öffnung 4 bis zu der Detektorkammer 5 sowie die Öffnungen 4 selbst auf Verschmutzung oder Verstopfungen akustisch abtastet. Vorzugsweise ist der Ultraschallsensor der Selbstprüfeinrichtung 7 dabei derart angeordnet, dass er auch durch die Öffnung 4 hindurch ragt und zumindest den unmittelbaren Nahbereich vor der Öffnung 4 außerhalb des Gehäuses 3 des Gefahrenmelders 1 mit abdeckt. Der auf diese Weise einfach abdeckbare Bereich liegt etwa in der Größenordnung von 5 bis 10 cm. Diese Selbstprüfeinrichtung wirkt mit der erfindungsgemäß vorgeschlagenen Einrichtung 8 zur Erkennung von Gegenständen im Nahbereich des Gefahrenmelders sinnvoll zusammen, ist dafür jedoch nicht unbedingt notwendig.

Die Selbstprüfeinrichtung 7 kann jedoch nicht feststellen ob der Gefahrenmelder 1 in seinem Nahbereich derart zugestellt ist, dass in einem geschlossenen Raum auftretende gefährliche Stoffe den Gefahrenmelder 1 unter Umständen gar nicht erreichen bzw. erst mit einer solchen Verspätung erreichen, dass in dem Raum befindliche Personen durch diese Stoffe schon geschädigt wurden.

Daher sieht der Gefahrenmelder 1 gemäß der vorliegenden Erfindung eine Einrichtung 8 zur Erkennung von Gegenständen im Nahbereich des Gefahrenmelders 1 mit genau einem Ultraschallsensor 9 vor, welcher dazu eingerichtet ist, einen Elevationswinkelbereich von mindestens 180°, d.h. +90° bis -90° um die Symmetrieachse des Ultrasensors 9, und einen Azimutwinkelbereich von 360° zu erfassen.

Gemäß der in Fig. 3 dargestellten, besonders bevorzugten Ausführungsform, weist der genau eine Ultraschallsensor 9 genau einen Ultraschallwandler 10 auf, der beispielsweise als Piezoelement ausgebildet sein kann. Ferner weist der Ultraschallsensor 9 eine Steuer- und Detektionsschaltung 6 auf, die mit dem Ultraschallsensor 9 verbunden ist und zur Steuerung des Ultraschallsensors 9 eingerichtet ist. Dabei kann für den Ultraschallsensor 9 eine separate Steuer-und Detektionsschaltung vorgesehen sein. In dem dargestellten Beispiel ist jedoch vorzugsweise eine für sämtliche Komponenten des Gefahrenmelders 1 vorgesehene Steuer- und Detektionsschaltung 6 vorgesehen, die daher neben einer Verbindung mit dem Ultraschallsensor 9 auch eine Verbindung mit der Detektorkammer 5 und der Selbstprüfeinrichtung 7 aufweist. Die Steuer- und Detektionsschaltung 6 ist erfindungsgemäß dazu eingerichtet, den Ultraschallwandler 10 als Ultraschallsender und/oder Ultraschallempfänger mit einer variabel einstellbaren Versorgungsspannung zu betreiben.

Diese Versorgungsspannung entnimmt die Steuer- und Rechenschaltung einer in ihr integrierten, nicht dargestellten Batterie. Um auch eine über der Batteriespannung, typischerweise 3 Volt, liegende Versorgungsspannung für den Ultraschallsensor 9 bzw. den Ultraschallwandler 10 zur Verfügung stellen zu können, weist der Ultraschallsensor 9 eine Spannungserhöhungsschaltung 11 auf, die beispielsweise mittels in der Spannungserhöhungsschaltung 11 integrierten Kondensatoren gepulst eine über der Batteriespannung liegende Versorgungsspannung für den Ultraschallwandler 10 zur Verfügung stellen kann. Beispielsweise mittels eines Spannungsteilers kann die Spannungserhöhungsschaltung 11 eine regelbare Versorgungsspannung für den Ultraschallwandler 10 zur Verfügung stellen. Erfindungsgemäß kann die Spannungserhöhungsschaltung 11 natürlich auch räumlich in die Steuer- und Detektionsschaltung 6 integriert sein, welche die Spannungserhöhungsschaltung 11 ansteuert.

Der in dem Gefahrenmelder 1 erfindungsgemäß zum Einsatz kommende Ultraschallsensor 9 ist in Fig. 4 noch einmal im Detail dargestellt. Der Ultraschallwandler 10 des Ultraschallsensors 9 wird durch eine rotationselliptische Oberfläche 12 des sensoraktiven Gehäusebereichs des Ultraschallsensors 9 abgedeckt. Diese Form trägt dazu bei, Ultraschallwellen über den gesamten Elevationsbereich von -100°/90° bis +90°/100° abzustrahlen.

Alternative Ausführungsformen der Oberfläche 12 des sensoraktiven Gehäusebereichs des Ultraschallsensors 9 sind in den Fig. 6a bis 6f dargestellt und werden später noch näher erläutert.

In dem Sockel 13 des Ultraschallsensors 9 ist die Spannungserhöhungsschaltung 11 integriert, die Teil der Steuer- und Detektionsschaltung 6 ist, welche in dem dargestellten Beispiel außerhalb des Sockels 13 in dem Gefahrenmelder 1 angeordnet ist, weil sie auch der Ansteuerung der Detektorkammer 5 sowie der Selbstprüfeinrichtung 7 dient.

Ferner kann die Steuer- und Detektionsschaltung 6 dazu ausgebildet sein, nicht dargestellte optische und/oder akustische Alarmgeber zu betätigen sowie Fehlersignale drahtgebunden oder drahtlos an entsprechend eingerichtete Empfangsstellen auszusenden.

Anhand von Fig. 5 wird das erfindungsgemäß vorgeschlagene Verfahren zur Ansteuerung des Ultraschallsensors 9 bzw. des darin enthaltenen, genau einen, Ultraschallwandlers 10 erläutert. Der Ultraschallsensor 9 ist im Zentrum des Gefahrenmelders angeordnet und ragt über dessen dem Raum zugewandte Gehäusefläche hinaus, so dass der sensoraktive Gehäusebereich des Ultraschallsensors 9 grundsätzlich auch einen Elevationswinkelbereich von 180° bis 200° bis hin zur rückwärtigen Montagefläche 2 des Ultraschallsensors abdecken kann.

Der Ultraschallwandler 10 des Ultraschallsensors 9 wird mit einer variabel einstellbaren Versorgungsspannung betrieben, welche durch die in Fig. 5 nicht dargestellte Steuer- und Detektionsschaltung 6 eingestellt wird. Dabei wird der Ultraschallwandler 10 zyklisch mit einer unterschiedlichen Sendeleistung und der jeweils an die Sendeleistung angepassten Empfangsempfindlichkeit betrieben, wobei jeder Zyklus von einem Minimalwert der Versorgungsspannung ausgeht und bis zu einem Maximalwert gesteigert wird.

Der Minimalwert entspricht beispielsweise der nominalen Versorgungsspannung, welche einen Elevationswinkelbereich I von -30° bis +30° abdeckt. In der nächsten Zyklusstufe wird die Versorgungsspannung soweit erhöht, dass zusätzlich der Elevationswinkelbereich 11 abgedeckt wird, der betragsmäßig beispielsweise 10° mehr beträgt, d.h. von -40° bis +40° reicht. Die für eine derartige Erhöhung des Elevationswinkels notwendige Versorgungsspannung kann aus den Fig. 1 und 2 entsprechenden Kennlinien des Ultraschallsensors abgelesen werden. Diese können erfindungsgemäß als individuelle Sendeleistungs-und Empfindlichkeits-Kennlinien bei der Herstellung des Ultraschallsensors 9 ermittelt und in der Steuer- und Detektionsschaltung 6 abgelegt bzw. gespeichert werden, so dass durch die Steuer- und Detektionsschaltung 6 einfacherweise der gewünschte Elevationswinkelbereich vorgegeben werden kann und die notwendige Versorgungsspannung aus den Kennlinien abgelesen wird.

In weiteren Zyklusschritten wird die Versorgungsspannung jeweils schrittweise weiter erhöht, bis der maximale Elevationswinkel von 180° bis 200° erreicht ist. Dieser Winkelbereich entspricht in dem dargestellten Beispiel gemäß Fig. 5 dem Elevationswinkelbereich VIII. Nach Messung in dem Elevationswinkelbereich VIII mit dem Maximalwert der Versorgungsspannung, der in typischen Beispielen bis zu etwa 20 Volt betragen kann, wird ein neuer Zyklus mit dem Minimalwert der Versorgungsspannung gestartet. Natürlich können zwischen den Zyklen vorgegebene Pausen abgewartet werden.

In jedem Elevationswinkelbereich I bis VIII sendet der Ultraschallwandler 10 in seinem Sendebetrieb zunächst ein Ultraschallwellenpaket aus und schaltet anschließend auf Empfang, wobei die Empfangsdauer durch ein Zeitfenster vorgegeben ist. Dieses Zeitfenster ist derart bemessen, dass eine durch den Ultraschallwandler 10 ausgesendete und an einem Gegenstand reflektierte Ultraschallwelle von dem Ultraschallwandler 10 im Empfangsmodus empfangen wird, wenn sich der Gegenstand innerhalb des zu detektierenden Nahbereichs des Gefahrenmelders 1 befindet. Die Länge des Zeitfensters entspricht also der Ausbreitungszeit einer Ultraschallwelle für die doppelte Entfernung (Hin- und Rückweg), welche den Nahbereich des Gefahrenmelders 1 definiert.

Sofern der Ultraschallsensor 9 in dem Elevationswinkelbereich I innerhalb des Zeitfensters keinen Empfang feststellt, kann davon ausgegangen werden, dass sich in diesem Elevationswinkelbereich 1 kein Gegenstand im Nahbereich des Gefahrenmelders 1 befindet. Anschließend wird im nächsten Zyklusschritt die Versorgungsspannung des Ultraschallwandlers 10 erhöht, so dass dieser nun insgesamt den Elevationswinkelbereich 11 abdeckt, welcher auch den Bereich I mit einschließt. Sofern innerhalb des vorgesehenen Zeitfensters auch hier keine reflektierte Schallwelle durch den Ultraschallwandler nachgewiesen wird, befindet sich auch in dem gesamten Elevationswinkelbereich II kein Gegenstand.

Dieses Verfahren wird für jeden Elevationswinkelbereich fortgesetzt. Wenn beispielsweise in dem Elevationswinkelbereich V eine reflektierte Ultraschallwelle innerhalb des Zeitfensters nachgewiesen wird, die in dem Elevationswinkelbereich IV noch nicht aufgetreten ist, kann die Steuer- und Detektionsschaltung 6 feststellen, dass genau in dem Elevationswinkelbereich V, der sich aus der Differenz der Elevationswinkelbereiche IV und V ergibt, ein Gegenstand im Nahbereich des Gefahrenmelders 1 angeordnet ist. Diese Information kann die Steuer- und Detektionsschaltung 6 beispielsweise an einen übergeordneten Empfänger aussenden.

Damit sich der Ultraschallwandler 10 nach dem Aussenden einer Ultraschallwelle möglichst schnell in Empfangsbereitschaft befindet, ist die Steuer- und Detektionsschaltung 6 dazu eingerichtet, den Ultraschallwandler 10 nach dem Aussenden einer Ultraschallwelle niederohmig kurzzuschließen und/oder das ausschwingende Signal des Ultraschallwandlers 10 zu messen und entsprechend gegenphasig anzusteuern. Hierdurch wird die Restenergie in dem Ultraschallwandler rasch abgebaut, so dass der Ultraschallwandler 10 zuverlässig und schnell auch im Nahbereich gestreute Ultraschallwellen empfangen kann.

Sobald ein Gegenstand im Nahbereich des Gefahrenmelders 1 nachgewiesen wird, kann der Zyklus zur Aussendung von Ultraschallwellen in den weiteren Elevationswinkelbereichen abgebrochen werden und nach definierter Zeit wieder neu aufgenommen werden.

In den Fig. 6a bis 6f sind verschiedene, bevorzugte Oberflächen 12 des sensoraktiven Bereichs des Ultraschallsensors 9 jeweils zusammen mit dem Ultraschallwandler 10 dargestellt. Fig. 6a zeigt eine rotationssphärische Ausgestaltung der Oberfläche 12 über eine Halbkugel. Fig. 6b zeigt entsprechend eine rotationselliptische Oberfläche 12 mit einer Halbellipse in einer 180°-Rotation. Entsprechend zeigt Fig. 6c eine rotationssinusförmige Oberfläche 12, d.h. eine Sinusfunktion mit einer 180°-Rotation.

Die Fig. 6d, 6e und 6f zeigen entsprechend eine sphärische, eine rotationselliptische und eine rotationssinusförmige Oberfläche 12, wobei die Oberfläche 12 des sensoraktiven Bereichs jeweils über die Halbkugel, die Halbellipse und einen Sinusbogen hinaus verlängert sind. Im Falle der Oberfläche 12 gemäß Fig. 6d (sphärisch) und Fig. 6e (elliptisch) führt die Fortsetzung der Halbsphäre bzw. der Halbellipse dazu, dass ausgehend von dem Ultraschallwandler 10 zunächst eine Verbreiterung der Oberfläche 12 stattfindet, die dann an der dem Ultraschallwandler 10 gegenüberliegenden Spitze verjüngt ist. Bei der sinusförmigen Oberfläche 12 gemäß Fig. 6f wird die Verjüngung hin zu dem Ultraschallwandler 10 durch Ansatz eines gespiegelten Sinusbogens erreicht.

Durch die Verjüngung der sensoraktiven Oberfläche 12 in Richtung des Ultraschallwandlers 10 wird eine besonders gute Abstrahlung der Ultraschallwellen auch in einem Elevationswinkelbereich zwischen 180° und 200°, d.h. von etwa -100° bis -90° sowie 90° bis 100° erreicht.

Da die Oberfläche 12 vorzugsweise rotationssymmetrisch ausgebildet ist, zeigt die in Fig. 7 dargestellte Draufsicht auf die Sensoroberfläche 12 eine Kreisform.

Die vorliegende Erfindung stellt somit einen preiswerten Gefahrenmelder 1 sowie ein geeignetes Verfahren zu seiner Ansteuerung vor, um mit einem einzigen Ultraschallsensor 9 und einem einzigen Ultraschallwandler 10 Gegenstände im Nahbereich des Gefahrenmelders von vorzugsweise bis zu 0,5 m Entfernung, gegebenenfalls auch bis zu 1 m Entfernung, über den kompletten Elevationswinkelbereich von 180° = -90° bis +90° und über den kompletten Azimutwinkelbereich von 0° bis 360° zu erkennen. Der Nahbereich kann dabei durch Vorgabe eines Empfangszeitfensters für reflektierte Ultraschallwellen vorgegeben und gegebenenfalls auch im Betrieb noch parametriert werden.

### Bezugszeichenliste:

- 1: Gefahrenmelder
- 2: Zimmerdecke
- 3: Gehäuse
- 4: Öffnung
- 5: Detektorkammer
- 6: Steuer- und Detektionsschaltung
- 7: Selbstprüfeinrichtung
- 8: Einrichtung zur Erkennung von Gegenständen im Nahbereich
- 9: Ultraschallsensor
- 10: Ultraschallwandler
- 11: Spannungserhöhungsschaltung
- 12: Oberfläche des sensoraktiven Gehäusebereichs
- 13: Sockel

## Patentansprüche

1. Gefahrenmelder mit einer innerhalb eines Gehäuses (3) des Gefahrenmelders (1) angeordneten Detektorkammer (5) zum Nachweis eines in die Detektorkammer gelangten Stoffes und/oder zum Nachweis einer in der Umgebung des Gefahrenmelders auftretenden Änderung eines üblichen Umgebungszu-standes, **dadurch gekennzeichnet, dass** in dem Gefahrenmelder eine Einrichtung (8) zur Erkennung von Gegenständen im Nahbereich des Gefahrenmelders (1) mit genau einem Ultraschallsensor (9) vorgesehen ist, welcher dazu eingerichtet ist, einen Elevationswinkelbereich von mindestens 180° und einen Azimutwinkelbereich von 360° zu erfassen.

2. Gefahrenmelder nach Anspruch 1, **dadurch gekennzeichnet, dass** der Ultraschallsensor (9) einen Ultraschallwandler (10) und eine Steuer- und Detektionsschaltung (6) mit einer Rechenschaltung aufweist, welche dazu eingerichtet ist, den Ultraschallwandler (10) als Ultraschallsender und/oder Ultraschallempfänger mit einer variabel einstellbaren Versorgungspannung zu betreiben.

3. Gefahrenmelder nach Anspruch 2, **dadurch gekennzeichnet, dass** die Steuer- und Detektionsschaltung (6) zur Spannungsversorgung eine Batterie aufweist, wobei die Steuer- und Detektionsschaltung (6) eine Spannungserhöhungsschaltung (11) aufweist, die gepulst und vorzugsweise regelbar eine über der Batteriespannung liegende Versorgungsspannung für den Ultraschallwandler (10) zur Verfügung stellt.

4. Gefahrenmelder nach Anspruch 2 oder 3, **dadurch gekennzeichnet, dass** die Steuer- und Detektionsschaltung (6) dazu eingerichtet ist, beim Umschalten von einem Aussenden von Ultraschallwellen zu einem Empfangen von Ultraschallwellen den Ultraschallwandler (10) über einen niederohmigen Widerstand kurzzuschließen und/oder das ausschwingende Signal des Ultraschallwandlers (10) zu messen und eine gegenphasige Ansteuerung vorzunehmen.

5. Gefahrenmelder nach einem der vorhergehenden Ansprüche, **dadurch gekennzeichnet, dass** der Ultraschallsensor (9) eine sphärische, rotationselliptische oder rotationssinusförmige Oberfläche (12) aufweist.

6. Gefahrenmelder nach einem der vorhergehenden Ansprüche, **dadurch gekennzeichnet, dass** der Ultraschallsensor (9) im Zentrum des Gefahrenmelders (1) an dessen Gehäuseoberfläche angeordnet ist.

7. Gefahrenmelder nach einem der vorhergehenden Ansprüche, **dadurch gekennzeichnet, dass** in dem Gehäuse (3) des Gefahrenmelders (1) mindestens eine Öffnung (4) ausgebildet ist und dass der Gefahrenmelder (1) eine Selbstprüfeinrichtung (7) zur Prüfung der Durchlässigkeit der in dem Gehäuse (3) ausgebildeten Öffnung (4) aufweist.

8. Verfahren zur Erkennung von Gegenständen im Nahbereich eines Gefahrenmelders (1), welcher eine innerhalb eines Gehäuses (3) des Gefahrenmelders (1) angeordnete Detektorkammer (5) zum Nachweis eines in die Detektorkammer gelangten Stoffes und/oder zum Nachweis einer in der Umgebung des Gefahrenmelders auftretenden Änderung eines üblichen Umgebungszustandes aufweist, **dadurch gekennzeichnet, dass** der Nahbereich des Gefahrenmelders (1) mit genau einem Ultraschallsensor (9) erfasst wird, indem ein Ultraschallwander (10) des Ultraschallsensors (9) als Ultraschallsender und/oder Ultraschallempfänger mit einer variabel einstellbaren Versorgungspannung betrieben wird, welche derart bemessen wird, dass der Elevationswinkelbereich des Ultraschallsensors (9) mindestens 180° über den gesamten Azimutwinkelbereich von 360° beträgt.

9. Verfahren nach Anspruch 8, **dadurch gekennzeichnet, dass** der Ultraschallsensor (9) nach dem Aussenden einer Ultraschallwelle für ein Zeitfenster auf Empfang geschaltet wird, welches derart bemessen ist, eine in dem zu erfassenden Nahbereich des Gefahrenmelders (1) reflektierte Ultraschallwalle mit dem Ultraschallwandler (10) zu empfangen.

10. Verfahren nach Anspruch 8 oder 9, **dadurch gekennzeichnet, dass** der Ultraschallwandler (10) zyklisch mit unterschiedlicher Sendeleistung und jeweils an die Sendeleisung angepasster Empfangsempfindlichkeit betrieben wird.

11. Verfahren nach Anspruch 10, **dadurch gekennzeichnet, dass** die Sendeleistung und Empfangsempfindlichkeit während eines Zyklus von einem Minimalwert bis zu einem Maximalwert gesteigert wird, wobei der Zyklus vorzugsweise abgebrochen wird, sobald ein Gegenstand im Nahbereich des Gefahrenmelders (1) detektiert wird.

## Claims

1. A hazard warning system comprising a detector chamber (5) arranged within a housing (3) of the hazard warning system (1) for detecting a substance that has reached the detection chamber and/or for detecting a change of a usual ambient condition occurring in the surroundings of the hazard warning system, **characterized in that** in the hazard warning system a device (8) for recognizing objects in the vicinity of the hazard warning system (1) is provided that has exactly one ultrasonic sensor (9) which is set up for covering a range of the elevation angle of at least 180° and a range of the azimuth angle of 360°.

2. The hazard warning system according to claim 1, **characterized in that** the ultrasonic sensor (9) has an ultrasonic transducer (10) and a control and detection circuit (6) with a computing circuit which is set up to operate the ultrasonic transducer (10) as an ultrasonic transmitter and/or ultrasonic receiver with a variably adjustable supply voltage.

3. The hazard warning system according to claim 2, **characterized in that** the control and detection circuit (6) has a battery for power supply, wherein the control and detection circuit (6) has a voltage increase circuit (11) which, in a pulsed and preferably controllable manner, provides a supply voltage for the ultrasonic transducer (10) which lies above the battery voltage.

4. The hazard warning system according to claim 2 or claim 3, **characterized in that** the control and detection circuit (6), when switching from transmitting ultrasonic waves to receiving ultrasonic waves, is set up to short-circuit the ultrasonic transducer (10) via a low-ohm resistor and/or to measure the attenuating signal of the ultrasonic transducer (10) and to perform an out-of-phase activation.

5. The hazard warning system according to any one of the preceding claims, **characterized in that** the ultrasonic sensor (9) has a spherical, rotationally elliptical or rotationally sinusoidal surface (12).

6. The hazard warning system according to any one of the preceding claims, **characterized in that** the ultrasonic sensor (9) is arranged in the center of the hazard warning system (1) on the housing surface of the same.

7. The hazard warning system according to any one of the preceding claims, **characterized in that** in the housing (3) of the hazard warning system (1) at least one opening (4) is formed and that the hazard warning system (1) has a self-checking device (7) for checking the permeability of the opening (4) formed in the housing (3).

8. A method for recognizing objects in the vicinity of a hazard warning system (1) which has a detector chamber (5) arranged within a housing (3) of the hazard warning system (1) for detecting a substance that has reached the detection chamber and/or for detecting a change of a usual ambient condition occurring in the surroundings of the hazard warning system, **characterized in that** the vicinity of the hazard warning system (1) is detected with exactly one ultrasonic sensor (9) **in that** an ultrasonic transducer (10) of the ultrasonic sensor (9) is operated as ultrasonic transmitter and/or ultrasonic receiver with a variably adjustable supply voltage which is dimensioned such that the range of the elevation angle of the ultrasonic sensor (9) is at least 180° over the entire range of the azimuth angle of 360°.

9. The method according to claim 8, **characterized in that** after transmitting an ultrasonic wave, the ultrasonic sensor (9) is switched to reception for a time window which is dimensioned so as to receive, with the ultrasonic transducer (10), an ultrasonic wave that is reflected in the vicinity to be detected of the hazard warning system (1).

10. The method according to claim 8 or claim 9, **characterized in that** the ultrasonic transducer (10) is operated cyclically with differing transmitting power and in each case with a receiving sensitivity that is adapted to the transmitting power.

11. The method according to claim 10, **characterized in that** the transmitting power and the receiving sensitivity is increased during a cycle from a minimum value up to a maximum value, wherein the cycle is preferably stopped as soon as an object is detected in the vicinity of the hazardous warning system (1).

## Revendications

1. Avertisseur de danger comprenant une chambre de détecteur (5) disposée à l'intérieur d'un boîtier (3) de l'avertisseur de danger (1) pour le décèlement d'une substance parvenant dans la chambre de détecteur et/ou pour le décèlement d'une modification, apparaissant dans l'environnement de l'avertisseur de danger, d'un état ambiant classique, **caractérisé en ce que**, dans l'avertisseur de danger, il est prévu un dispositif (8) pour la détection d'objets dans la zone proche de l'avertisseur de danger (1) comprenant exactement un capteur à ultrasons (9), lequel est équipé pour détecter une plage d'angles d'élévation d'au moins 180° et une plage d'angles d'azimut de 360°.

2. Avertisseur de danger selon la revendication 1, **caractérisé en ce que** le capteur à ultrasons (9) présente un convertisseur d'ultrasons (10) et un circuit de commande et de détection (6) avec un circuit de calcul, qui est équipé pour exploiter le convertisseur d'ultrasons (10) comme émetteur d'ultrasons et/ou récepteur d'ultrasons avec une tension d'alimentation réglable de façon variable.

3. Avertisseur de danger selon la revendication 2, **caractérisé en ce que** le circuit de commande et de détection (6) destiné à l'alimentation en tension présente une batterie, le circuit de commande et de détection (6) présentant un circuit d'élévation de tension (11), qui met à disposition de façon pulsée et de préférence réglable une tension d'alimentation située au-dessus de la tension de batterie pour le convertisseur d'ultrasons (10).

4. Avertisseur de danger selon la revendication 2 ou 3, **caractérisé en ce que** le circuit de commande et de détection (6) est équipé pour court-circuiter le convertisseur d'ultrasons (10) au moyen d'une résistance à basse impédance lors de la commutation d'une émission d'ondes ultrasonores vers une réception d'ondes ultrasonores et/ou de mesurer le signal s'évanouissant du convertisseur d'ultrasons (10) et d'effectuer une activation à phase opposée.

5. Avertisseur de danger selon l'une des revendications précédentes, **caractérisé en ce que** le capteur à ultrasons (9) présente une surface (12) sphérique, elliptique en rotation ou sinusoïdale en rotation.

6. Avertisseur de danger selon l'une des revendications précédentes, **caractérisé en ce que** le capteur d'ultrasons (9) est disposé au centre de l'avertisseur de danger (1) sur sa surface de boîtier.

7. Avertisseur de danger selon l'une des revendications précédentes, **caractérisé en ce qu'**au moins une ouverture (4) est réalisée dans le boîtier (3) de l'avertisseur de danger (1) et **en ce que** l'avertisseur de danger (1) présente un dispositif d'autotest (7) pour l'examen de la perméabilité de l'ouverture (4) réalisée dans le boîtier (3).

8. Procédé pour détecter des objets dans la zone proche d'un avertisseur de danger (1), qui présente une chambre de détecteur (5) disposée à l'intérieur d'un boîtier (3) de l'avertisseur de danger (1) pour le décèlement d'une substance arrivée dans la chambre de détecteur et/ou pour le décèlement d'une modification, apparaissant dans l'environnement de l'avertisseur de danger, d'un état ambiant classique, **caractérisé en ce que** la zone proche de l'avertisseur de danger (1) est détectée avec exactement un capteur d'ultrasons (9), du fait qu'un convertisseur d'ultrasons (10) du capteur à ultrasons (9) est exploité sous forme d'émetteur d'ultrasons et/ou de récepteur d'ultrasons avec une tension d'alimentation réglable de façon variable, laquelle tension est conçue de telle sorte que la plage d'angles d'élévation du capteur d'ultrasons (9) représente au moins 180° sur l'ensemble de la plage d'angles d'azimut de 360°.

9. Procédé selon la revendication 8, **caractérisé en ce que** le capteur d'ultrasons (9) est commuté après l'émission d'une onde à ultrasons pour une fenêtre temporelle sur réception, qui est conçue de façon à recevoir une onde ultrasonore réfléchie dans la zone proche à détecter de l'avertisseur de danger (1) avec le convertisseur d'ultrasons (10).

10. Procédé selon la revendication 8 ou 9, **caractérisé en ce que** le convertisseur d'ultrasons (10) est utilisé de façon cyclique avec une puissance d'émission différente et à chaque fois à une sensibilité de réception adaptée à la puissance d'émission.

11. Procédé selon la revendication 10, **caractérisé en ce que** la puissance d'émission et la sensibilité de réception sont augmentées pendant un cycle depuis une valeur minimale jusqu'à une valeur maximale, le cycle étant interrompu de préférence dès qu'un objet est détecté dans la zone proche de l'avertisseur de danger (1).
